# EUROPEAN PATENT APPLICATION

(11) **EP 3 381 293 A1**
(43) Date of publication of application: **03.10.2018**
(21) Application number: 17163313.4
(22) Date of filing: 28.03.2017
(51) Int. Cl.: A23F 3/36, A23F 5/20, A23L 5/30

(54) **METHOD FOR TREATING A CAFFEINE CONTAINING OBJECT, IN PARTICULAR COFFEE BEANS OR TEA LEAVES**

(71) Applicant: De Jong Beheer B.V., 9423 PJ Hoogersmilde (NL)
(72) Inventor: De Jong, Klaas, 9423 OH Hoogersmilde (NL); Ras, Willem, 8300-054 Silves (PT)
(74) Representative: 't Jong, Bastiaan Jacob

(57) **Abstract**

The invention relates to a method for treating a caffeine containing object, in particular coffee beans or tea leaves, which method comprises the steps of:
- providing an electrical coil and creating an electrical field by bringing the coil in resonance with a direct current having an alternating current component;
- positioning a container with a caffeine containing object, in particular coffee beans or tea leaves, in the electrical field of the coil;
wherein the alternating current component has a frequency in the range of 243kHz - 253kHz and wherein the direct current is in the range of 55% - 100% of the amplitude of the alternating current component.

## Description

The invention relates to a method for treating a caffeine containing object, in particular coffee beans or tea leaves.

A number of processes is known for decaffeinating caffeine containing objects, such a coffee beans or tea leaves. Typically, the caffeine is removed before the fluid is brewed from the coffee beans or tea leaves.

The coffee beans or tea leaves are treated to extract the caffeine, after which the beans or leaves are used to brew the coffee or tea. However, the extraction process, also will extract other components, which will influence the taste of the coffee or tea.

Especially, with a solvent based decaffeinating process, the beans or leaves are soaked several hours in a solvent extracting not only the caffeine, but also oils and flavor elements. These oils and flavor elements can be separated from the caffeine and reintroduced in the coffee beans or tea leaves, but it still will affect the taste of the brewed fluid.

A further problem with the known decaffeinating processes is that especially the coffee beans are difficult to roast after they have been decaffeinated. So, the resulting decaffeinated coffee will typically have a reduce taste due to the decaffeinating process and the roasting.

It is an object of the invention to provide a different method to treat a caffeine containing object, in particular coffee beans or tea leaves.

This object is achieved with a method comprising the steps of:
- providing an electrical coil and creating an electrical field by bringing the coil in resonance with a direct current having an alternating current component;
- positioning a container with a caffeine containing object, in particular coffee beans or tea leaves, in the electrical field of the coil;
wherein the alternating current component has a frequency in the range of 243kHz - 253kHz and wherein the direct current is in the range of 55% - 100% of the amplitude of the alternating current component.

It is believed that by subjecting the caffeine containing objects, in particular coffee beans or tea leaves to an electrical field caused by the coil that has been brought in resonance by a direct current with alternating current component, wherein the alternating current component has a frequency and the direct current has a value as defined by the invention, the caffeine is changed in structure, such that it no longer has its known effects. As all oils and flavor components remain in the caffeine containing objects, the taste is not adversely affected, while the effects of the caffeine is neutralized.

The theory is that the specific frequency range of 243 kHz - 253 kHz in combination with the offset of the direct current causes the caffeine to vibrate and so changing the structure of the caffeine, which then no longer exposes the known effects of caffeine.

Preferably, the caffeine containing objects are treated for at least three hours in order to provide a maximum decaffeination of the objects.

In a preferred method according to the invention the alternating current component has a frequency of 247.666 kHz. In relation to caffeine, this frequency results in the most effective way to reduce the negative effects of the caffeine.

In a further preferred embodiment of the method according to the invention the value of the direct current is 100% of the amplitude of the alternating current component.

It is also preferred when the voltage of the direct current is in the range of 5V - 10V, preferably 7,5V.

This further contributes to an effective treatment of caffeine containing objects in order to reduce the known effects of caffeine.

In yet another embodiment of the method according to the invention the wave-shape of the alternating current component is sinusoidal. A sinusoidal alternating current component stimulates best the vibrations of the caffeine, such that the power provided to the coil is optimally used.

The invention also relates to a device for treating a caffeine containing object, in particular coffee or tea, which device comprises:
- a container for containing the caffeine containing object;
- a coil positioned adjacent to container, such that at least part of the electrical field of the coil extends through the container
- resonance means for bringing the coil in resonance according to the method of the invention.

With the device according to the invention, a user can easily treat a caffeine containing object, such as coffee beans or tea leaves, by positioning the object in the container and then have the resonance means bring the coil in resonance according to the method of the invention. The coil will ensure that an electrical field is generated in the object.

The coffee beans or tea leaves can be grinded such that the electrical field can better and more effectively reach the caffeine in the objects.

In a preferred embodiment of the device according to the invention the coil is a flat coil arranged to a support surface and wherein the container is positioned on the support surface.

With this embodiment according to the invention a table top device is provided on which a container of coffee beans or tea leaves can be treated.

In another preferred embodiment of the device according to the invention the container is arranged on the inside of the coil.

In combination with the features that the container has a cylindrical wall and the coil is arranged on or in the cylindrical wall, the container can be reusable, while the coil is integrated into the container.

These and other features of the invention will be elucidated in conjunction with the accompanying drawings.
Figure 1 shows a schematic view of a first embodiment of the device according to the invention.
Figure 2 shows a diagram of the electrical direct current with alternating current component wave fed to the coil of figure 1.
Figure 3 shows a schematic view of a second embodiment of the device according to the invention.

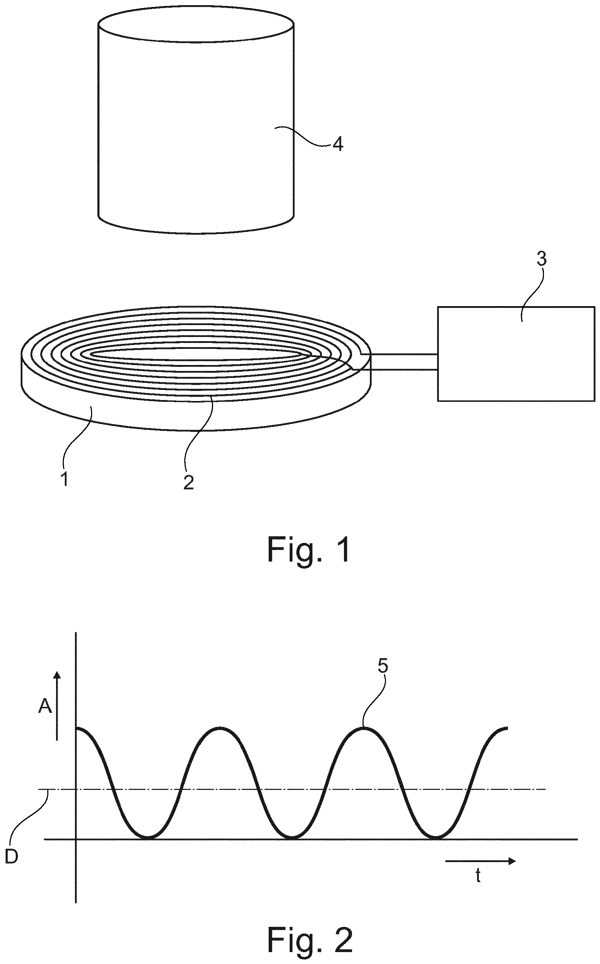

Figure 1 shows a support table 1 in which a flat coil 2 is integrated. The coil 2 is brought in resonance by resonance means 3, which supply the coil 2 with a direct current with alternating current component wave. A container 4 with a caffeine containing object, such as coffee beans or tea leaves, can be placed on top of the table 1.

The resonance means 3 will then supply the coil 2 with a direct current with alternating current component wave, which causes the coil 2 to generate an electrical field, which in turn will reduce the known effects of caffeine.

The wave-shape of the current is shown in figure 2. The current 5 has a sinusoidal shape. The current 5 has a direct current D, which is, in this embodiment, equal to 100% of the amplitude of the sinusoidal shape of the alternating current component.

The timing t of the current is such that the frequency of the current 5 is in the range of 243kHz - 253kHz.

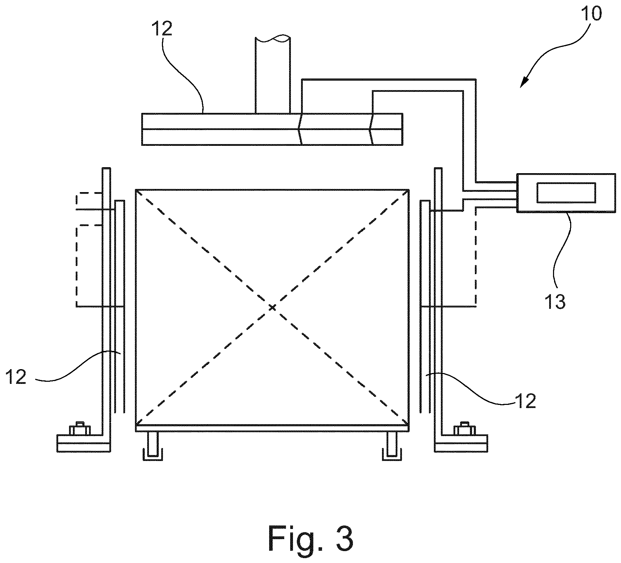

Figure 3 shows a second embodiment 10 of the device according to the invention. The device 10 is a container with coffee beans or tea leaves which is brought between aside/top mounted coil(s) 12. This coil 12 is driven by means 13, which operate in similar way as the driving means 3 as described in relation to figure 1. The coffee beans or tea leaves are treated To reduce the known effects of caffeine.

## Claims

1. Method for treating a caffeine containing object, in particular coffee and tea, which method comprises the steps of:
- providing an electrical coil and creating an electrical field by bringing the coil in resonance with a direct current having an alternating current component;
- positioning a container with a caffeine containing object, in particular coffee beans or tea leaves, in the electrical field of the coil;
wherein the alternating current component has a frequency in the range of 243kHz - 253kHz and wherein the direct current is in the range of 55% - 100% of the amplitude of the alternating current component.

2. Method according to claim 1, wherein the alternating current component has a frequency of 247.666 kHz.

3. Method according to claim 1 or 2, wherein the direct current is 100% of the amplitude of the alternating current component.

4. Method according to any of the preceding claims, wherein the voltage of the direct current is in the range of 5V - 10V, preferably 7,5V.

5. Method according to any of the preceding claims, wherein the wave-shape of the alternating current component is sinusoidal.

6. Device for treating a caffeine containing object, in particular coffee beans or tea leaves, which device comprises:
- a container for containing the caffeine containing object;
- a coil positioned adjacent to container, such that at least part of the electrical field of the coil extends through the container.
- resonance means for bringing the coil in resonance according to the method of any of the preceding claims.

7. Device according to claim 6, wherein the coil is a flat coil arranged to a support surface and wherein the container is positioned on the support surface.

8. Device according to claim 6, wherein the container is arranged on the inside of the coil.

9. Device according to claim 8, wherein the container has a cylindrical wall and wherein the coil is arranged on or in the cylindrical wall.
